# EUROPÄISCHE PATENTSCHRIFT

(11) **EP 1 259 748 B1**
(45) Veröffentlichungstag und Bekanntmachung des Hinweises auf die Patenterteilung: **19.01.2005**
(21) Anmeldenummer: 01915049.9
(22) Anmeldetag: 28.02.2001
(51) Int. Cl.: F16H 61/32

(54) **ELEKTROMECHANISCHE VERSTELLEINHEIT FÜR EIN GETRIEBE**
ELECTROMECHANICAL ADJUSTING UNIT FOR A TRANSMISSION
UNITE D'AJUSTEMENT ELECTROMECANIQUE POUR BOITE DE VITESSES

(30) Priorität: 03.03.2000 DE 10010636
(43) Veröffentlichungstag der Anmeldung: 27.11.2002
(73) Patentinhaber: SIEMENS AKTIENGESELLSCHAFT, 80333 München (DE)
(72) Erfinder: FRANZEN, Frank, 93077 Bad Abbach (DE); GILLY, Joachim, 97230 Estenfeld (DE); SMIRRA, Karl, 83512 Wasserburg (DE); ULM, Michael, 93087 Alteglofsheim (DE); BECKER, Ingo, 52441 Linnich (DE); KIRSCHKE-BILLER, Frank, 42929 Wermelskirchen (DE)
(86) Internationale Anmeldenummer: PCT/DE2001/000745
(87) Internationale Veröffentlichungsnummer: WO 2001/065151

(56) Entgegenhaltungen:
- EP-A- 0 187 117
- US-A- 4 873 881
- US-A- 5 068 583

## Beschreibung

Die Erfindung betrifft eine elektromechanische Verstelleinheit zum Einstellen der Schaltstellungen eines Getriebes, insbesondere eines Kraftfahrzeuggetriebes oder eines Verteilergetriebes.

Neben front- oder heckangetriebenen Fahrzeugen werden heute vermehrt auch Allrad-angetriebene Kraftfahrzeuge (Kfz) in der Automobilindustrie hergestellt. Während der Antriebsstrang für front- oder heckangetriebene Kfz mit einem Motor und einem nachgeschalteten Getriebe auskommt, ist diesem Antriebsstrang bei Allrad-angetriebenen Fahrzeugen noch ein sogenanntes Verteilergetriebe nachgeschaltet. Verteilergetriebe haben die Aufgabe, die im Fahrzeugmotor erzeugte Gesamtantriebsleistung abhängig von der Gangwahl des Fahrers oder eines Automatik-Schaltalgorithmus in zwei Teilantriebsleistungen für die Vorder- und Hinterachse (oder auch in vier Teilantriebsleistungen für die vier Räder) des Kfz aufzuteilen. Die rotierende Abtriebswelle des Fahrzeuggetriebes dient dabei als Eingangswelle des Verteilergetriebes.

Zur Aufteilung der Eingangsleistung müssen in dem Verteilergetriebe unterschiedliche Schaltstellungen auf mechanischem Wege realisiert werden. Hierzu enthält das Verteilergetriebe eine Schaltstellmechanik, die ihrerseits von einer an dem Verteilergetriebe befestigten elektromechanischen Verstelleinheit betätigt wird. Die Verstelleinheit besteht üblicherweise aus einem Elektromotor und einem Stellgetriebe. Betätigt der Fahrer des Kfz den Wählhebel für eine gewünschte Schaltstellung des Verteilergetriebes (z.B. 4H: 4-Rad-Antrieb), so wird dem Elektromotor ein Anregungsstrom zugeführt, der eine Rotation der Motorwelle, eine dadurch bewirkte Verstellung des mechanischen Ausgangs des Stellgetriebes und - durch Betätigung der Getriebe-internen Schaltstellmechanik- den Übergang des Verteilergetriebes in die gewünschte Schaltstellung herbeiführt.

Aus US 4,873,881 ist eine elektrisch gesteuerte Verschiebemechanik bekannt, welche zur Wahl einer Schaltstellung eines Schaltgetriebes in X-Y-Richtung verschoben werden kann. Die Verschiebemechanik ist dazu in einem ersten separaten Gehäuse angeordnet, welches auf einem zweiten Gehäuse montiert ist, in dem die Schaltstellung-Verschiebestange angeordnet ist. Durch eine Steuereinheit werden zwei Motoren und ein Verschiebefinger derart gesteuert, dass die Verschiebeschienen der Verschiebemechanik in dem zweiten Gehäuse in X- und Y-Richtung verschoben werden können und somit eine Änderung der Schaltstellung erreicht wird.

Des Weiteren ist aus der gattungsbildenden EP 0 187 117 A2 ein elektrischer Schall-Stellantrieb für ein Kraftfahrzeug-Verteilergetriebe bekannt. Über einen Motor wird ein Schneckengetriebe angetrieben, welches über eine Eingangswelle mit dem separaten Verteilergetriebe verbunden ist. Abhängig von der Rotationsposition der Eingangswelle kann das Verteilergetriebe über Nocken und Stellantriebsjoche auf eine bestimmte Betriebsart eingestellt werden. Die separate Steuereinheit erhält abhängig von der Stellung des Schneckengetriebes ein Signal, indem mittels Kontaktlamellen, welche auf einer separaten Platte angeordnet sind, eine Außenplatte des Schneckengetriebes kontaktiert wird und die Getriebestellung erkannt wird. Des Weiteren ist die Steuereinheit mit einem Schalter zur Wahl der Betriebsart elektrisch verbunden. Abhängig von dem empfangenen Signal des Betriebswahlschalters und des Signals der Position des Schneckengetriebes steuert die Steuereinheit den Motor durch welchen eine Rotation des Schneckengetriebes und somit auch des Verteilergetriebes in eine gewünschte, durch den Betriebswahlschalter ausgewählte Position, erfolgt.

Aus der Patentschrift US 5,068,583 ist eine elektrische Verschiebevorrichtung bekannt, welche mit einem KraftfahrzeugGetriebe verbunden ist, um die Antriebsleistung abhängig von der Gangwahl des Fahrers auf zwei mögliche Schaltzustände aufzuteilen. Über einen Motor wird ein Schneckengetriebe und eine Spindelschraube angetrieben, bei deren Drehung eine Trägeranordnung und ein Stellgetriebe, an welchem eine Gabelbefestigung angeordnet ist, in Abhängigkeit der Kompression einer Feder verschoben werden. Ober Sensoren, welche an einer im Gehäuse angeordneten Steuerelektronik befestigt sind, wird das Verschieben der Trägeranordnung und somit auch des Stellgetriebes von der ersten Schalterstellung in die zweite Schalterstellung erkannt.

Bekannte elektromechanische Verstelleinheiten weisen den Nachteil auf, daß die Ansteuerung des Elektromotors von einer entfernt angeordneten Steuerelektronik durchgeführt wird, was aufgrund der erforderlichen Kabelverbindungen Kostennachteile und darüber hinaus Einschränkungen in der Funktionalität, gelegentlich auch in der Funktionssicherheit, mit sich bringt. Ferner weisen bisher bekannte Verstelleinheiten keine integrierte Sensorik auf.

Aus der JP 10 108 402 A ist ein elektromechanischer Schneckenantrieb bekannt, der einen Schaltungsträger aufweist, der sich parallel zur Mittenebene des Schneckenrades erstreckt und an dem die Kommutatorkontakte des Motors angebracht sind. Eine Integration von Sensorik ist aber auch bei diesem Gegenstand nicht vorgesehen.

Der Erfindung liegt die Aufgabe zugrunde, eine elektromechanische Verstelleinheit zum Einstellen der Schaltstellungen eines Getriebes zu schaffen, deren Auslegung ein hohes Maß an Funktionalität und Kosteneinsparungspotential ermöglicht. Insbesondere soll die Verstelleinheit einen hohen Integrationsgrad bezüglich mechanischer, elektromechanischer und elektronischer Komponenten bieten und dadurch eine kompakte Bauweise der Verstelleinheit gewährleisten.

Diese Aufgabe wird durch die Merkmale der unabhängigen Ansprüche 1 und 3 gelöst.

Nach einem ersten Aspekt der Erfindung wird durch die Integration des Schaltungsträgers mit darauf angeordneter Elektronikschaltung und des Sensormittels in die Verstelleinheit, wobei sich der Schaltungsträger im wesentlichen parallel zur Mittenebene eines Schneckenrades des Schneckengetriebes erstreckt und das Stellgetriebe ein Schneckengetrieb ist, eine Anordnung geschaffen, die sämtliche für die Regelung des Verstellantriebs benötigten Komponenten bereits enthält, und daher mit einem Minimum an Kontaktsteckern und Kabelsätzen zur Anbindung an die elektrische Fahrzeug-Peripherie auskommt.

Durch die Lageposition des Schaltungsträgers wird eine platzsparende Unterbringung des Schaltungsträgers in dem Bauvolumen der Einheit erreicht. Die Gegenüberlage von elektronischem Umfang (Schaltungsträger mit Elektronikschaltung und ggf. Sensorik) und mechanischem Umfang (Stellgetriebe, elektromechanischer Antrieb) hat darüber hinaus den Vorteil, daß diese beiden Umfänge über weite Bereiche benachbart verlaufen, wodurch es praktisch immer möglich ist, einen geeigneten Ort auf dem Schaltungsträger zur Anbringung der Sensorik zu finden. Ein weiterer Vorteil einer solchen Schaltungsträgerplazierung besteht darin, daß dieser in einfacher Weise großflächig an einen Kühlkörper oder andere geeignete Wärmesenken ankoppelbar ist.

Nach einem weiteren Aspekt der Erfindung wird durch die Integration von Kommutatorkontakten für den elektromechanischen Antrieb auf dem Schaltungsträger mit darauf angeordneter Elektronikschaltung und der Integration des Sensormittels in die Verstelleinheit eine Anordnung geschaffen, die eine sehr kompakte Bauweise aufweist und in einfacher Weise sowohl eine Anbindung an eine erste Baugruppe - den Motor - als auch eine Anbindung an eine zweite Baugruppe - das Schneckengetriebe - ermöglicht.

Neben den Kostenvorteilen die beide Aspekte der Erfindung aufweisen und die eine solche integrierte Bauweise im Vergleich zu einer "verteilten" Lösung bietet, wird durch die Kombination von Elektronik und Sensorik in einem Gerät eine hohe Auslegungsvariabilität des Gesamtsystems Elektronik/Sensorik geschaffen, die bei einer Verstelleinheit mit entfernt angeordneter Elektroniksteuerung und/oder ausgelagerter Sensorik nicht oder nur mit hohem Verkabelungsaufwand erzielbar ist. Dadurch kann die Funktionalität der Verstelleinheit erhöht und die Betriebssicherheit der Einheit günstig beeinflußt werden.

Ein unter schaltungstechnischen Gesichtspunkten besonders kompakter Aufbau wird erreicht, wenn das Sensormittel direkt auf dem Schaltungsträger, der die Elektronikschaltung trägt, aufgebracht und elektrisch kontaktiert wird. Diese Ausgestaltung bietet auch unter dem Gesichtspunkt der elektromagnetischen Verträglichkeit (EMV) Vorteile.

Neben dem Sensormittel können in vorteilhafter Weise auch weitere Komponenten auf dem Schaltungsträger angeordnet und von diesem elektrisch kontaktiert sein. Insbesondere können auf dem Schaltungsträger eine Steckerbuchse zum Einbinden der elektromechanischen Verstelleinheit an eine elektrische Kfz-Peripherie angebracht sein. Darüber hinaus können auf dem Schaltungsträger ein H-Brücken-Motorantrieb für den elektromechanischen Antrieb, auf Hall-IC's- oder GMR-(giant magneto resistance-)Bauelementen basierende Bewegungs- oder Absolutwinkel-Erkennungssensoren, eine Stromabtasteinheit, usw. angebracht sein.

Gemäß einer ersten bevorzugten Möglichkeit ist der Schaltungsträger so dimensioniert, daß er ausschließlich einen Randbereich des Schneckenrades überdeckt, und daß in diesem Bereich ein erster Sensor, insbesondere Hall-Sensor, zur Erfassung eines Drehbewegungungswegs des Schneckenrads an dem Schaltungsträger angebracht ist. Es läßt sich so eine inkrementelle Drehwinkelbestimmung realisieren.

Bei einer weiteren Möglichkeit der Schaltungsträgerdimensionierung überdeckt dieser das Zentrum des Schneckenrades, und es befindet sich in einem Bereich benachbart des Schneckenradzentrums ein an dem Schaltungsträger angebrachter zweiter Sensor, insbesondere GMR-Sensor, der zur Erfassung einer absoluten Drehwinkelstellung des Schneckenrades geeignet ist. Bei beiden Möglichkeiten kann der Schaltungsträger so zugeschnitten sein, daß er das antriebsferne Ende einer Schneckenwelle des Schneckengetriebes überdeckt, wobei in diesem Bereich ein dritter Sensor, insbesondere GMR-Sensor, zur Ermittlung einer Drehzahl der Schneckenwelle an dem Schaltungsträger angebracht ist.

Zum Schutz vor Verschmutzung ist die Einheit zweckmäßigerweise so gestaltet, daß der Schaltungsträger in einem von dem Stellgetriebe abgeteilten Gehäuseraum untergebracht ist.

Bei dem Schaltungsträger handelt es sich vorzugsweise um eine starre Leiterplatte, jedoch können je nach konkretem Anwendungsfall auch starr-flexible Leiterplatten oder gegebenenfalls komplett flexible Leiterplatten als Schaltungsträger eingesetzt werden.

Besonders eignet sich die Erfindung für den Einsatz in Getrieben von Kraftfahrzeugen, und ganz besonders für eine Verteilergetriebe, das die im Fahrzeugmotor erzeugten Leistung auf die Vorder- und Hinterachse eines Allrad-angetriebenen Fahrzeugs aufteilt.

Nachfolgend wird die Erfindung anhand von zwei Ausführungsbeispielen und Varianten derselben unter Bezugnahme auf die Zeichnung näher beschrieben, wobei gleiche oder ähnliche Teile in den Zeichnungsfiguren mit denselben Bezugszeichen gekennzeichnet sind. In der Zeichnung zeigt:
- Fig. 1: eine schematische, teilweise aufgeschnittene Rückansicht einer Verstelleinheit gemäß einem ersten Ausführungsbeispiel der Erfindung;
- Fig. 2: eine schematische, aufgeschnittene Seitenansicht der in Fig. 1 gezeigten Verstelleinheit in Blickrichtung des Pfeils A;
- Fig. 3: eine schematische, teilweise aufgeschnittene Ansicht einer Verstelleinheit gemäß einem zweiten erfindungsgemäßen Ausführungsbeispiel in rückseitiger Draufsicht;
- Fig. 4: eine teilweise aufgeschnittene Seitenansicht einer weiteren Verstelleinheit in Blickrichtung des Pfeils A in den Fig. 1 und 3; und
- Fig. 5: eine Schnittdarstellung der in Fig. 4 gezeigten Verstelleinheit entlang der Linie I-I.

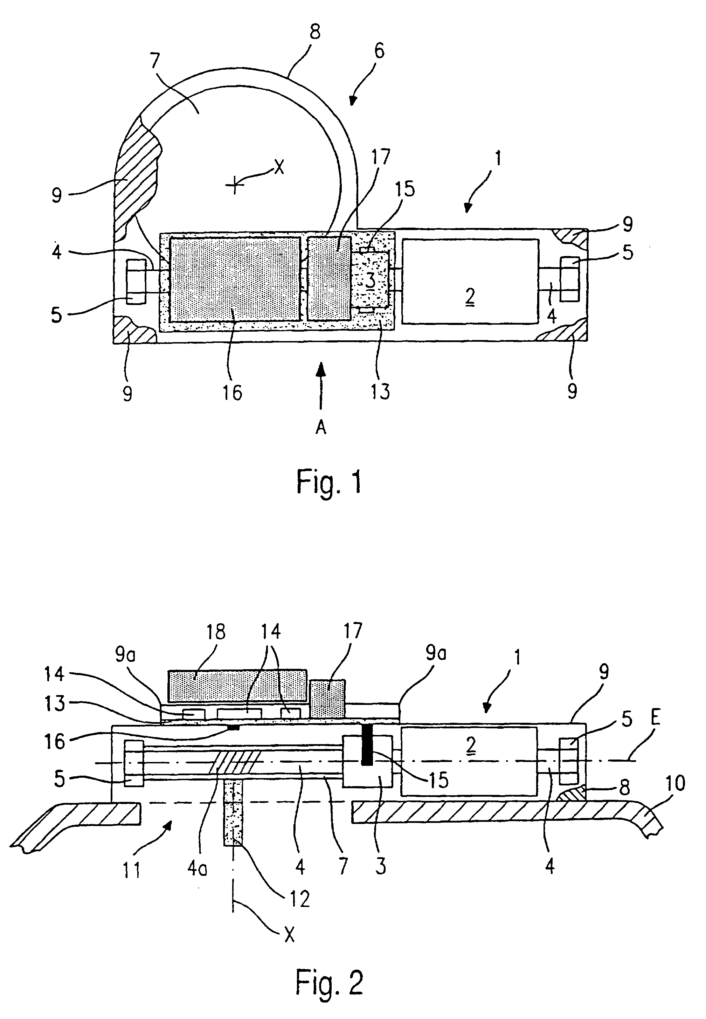

Gemäß Fig. 1 enthält eine erfindungsgemäße elektromechanische Verstelleinheit gemäß einem ersten Ausführungsbeispiel der Erfindung einen Elektromotor 1, der in üblicher Weise aus einem Rotor 2 und einem Kommutator 3 aufgebaut ist, welche über eine Welle 4 drehfest miteinander verbunden sind. Die Welle 4 ist an ihren beiden Enden in gehäusefesten Drehlagern 5 gelagert.

Der Elektromotor 1 treibt ein Schneckengetriebe 6 an. Zu diesem Zweck ist die Welle 4 an einem freien Abschnitt zwischen dem Kommutator 3 und dem motorfernen Lager 5 mit einem Schneckengewinde versehen. Das Schneckengewinde 4a greift in eine Umfangsverzahnung eines benachbart angeordneten kreisscheibenförmigen Schneckenrades 7 ein, wobei eine Rotation der Welle 4 eine Drehbewegung des Schneckenrades 7 um seine Drehachse X herbeiführt.

Der Elektromotor 1 und das Schneckengetriebe 6 sind in einem Gehäuse untergebracht, von dem in Fig. 1 der Umriß der Gehäuseseitenwand 8 sowie Reste des zu Darstellungszwecken aufgeschnittenen Gehäusebodens 9 erkennbar sind.

Gemäß Fig. 2 kann die Verstelleinheit unmittelbar an der Gehäusewand 10 eines Verteilergetriebes angebracht sein. Die Gehäusewand 10 weist im Bereich der Drehachse X eine Öffnung oder Durchführung 11 auf, durch welche eine Abtriebswelle 12 des Scheckenradgetriebes 6 hindurchragt. Die Abtriebswelle 12 überträgt eine Rotation des Schneckenrades 7 auf eine Schaltstellmechanik (nicht dargestellt) innerhalb des Verteilergetriebes. Die Schaltsellmechanik des Verteilergetriebes kann auf vielfältige Art und Weise realisiert sein. Beispielsweise kann eine von der Abtriebswelle 12 rotierte Rastenscheibe vorgesehen sein, an der ein Hebelarm angebracht ist, welcher durch eine Drehung der Rastenscheibe hin- und her verschoben wird. Durch die Verschiebung des Hebelarms werden über Verschiebebleche Kupplungen geöffnet bzw. geschlossen, wodurch bestimmte Schaltstellungen in dem Verteilergetriebe festgelegt werden. Mögliche Schaltstellungen sind beispielsweise 2WD (2-Radantrieb, entspricht der Standardeinstellung), N (Neutralposition, d.h. keine Drehmomentverteilung an die Front- und Hinterachse), 4H (4-Rad-Antrieb) und 4L (4-Rad-Antrieb mit zusätzlich zugeschaltetem Untersetzungsgetriebe).

Neben den mechanischen und elektromechanischen Komponenten ist die Verstelleinheit mit einer Vor-Ort-Elektronik und - Sensorik ausgerüstet. Zentrales Element dieser Vor-Ort-Elektronik ist ein Schaltungsträger 13. Der Schaltungsträger 13 ist mit Elektronikbauteilen 14, darunter auch ein Mikroprozessor, bestückt, die eine Elektronikschaltung zur Steuerung des Elektromotors 1 bilden. Da ein möglichst hoher Integrationsgrad sämtlicher Baugruppen der Verstelleinheit und insbesondere der Elektronik und der Sensorik angestrebt wird, ist die Art, Formgebung und Lage des Schaltungsträgers 13 von besonderer Bedeutung. Hiervon hängt ab, welche weiteren Komponenten auf dem Schaltungsträger 13 angebracht werden können, was wiederum einen Einfluß darauf hat, welche Funktionen der Steuerung sich einfach und kostengünstig realisieren lassen.

Gemäß dem ersten Ausführungsbeispiel (Fig. 1 und 2) ist der Schaltungsträger 13 rechteckförmig gestaltet, wobei seine Längsseiten parallel zur der Welle 4 orientiert sind. Der Schaltungsträger 13 liegt im wesentlichen parallel zu einer Ebene E, die durch das Schneckengetriebe 6 definiert wird. Dabei überdeckt der Schaltungsträger 13 mit einem dem Elektromotor 1 zugewandten Endabschnitt den Kommutator 3 und mit einem zentralen Abschnitt den Eingriffsbereich des Schneckengetriebes 6 sowie einen Randabschnitt des Schneckenrads 7.

Dadurch wird einerseits erreicht, daß an dem Schaltungsträger 13 Kommutatorkontakte 15 des Elektromotors 1 angebracht sein können. Dies ermöglicht, sämtliche Komponenten für die Ansteuerung des Elektromotors (z.B. Mikroprozessor-geregelter Motorantriebschaltkreis, Strommeßeinrichtung, zugehörige Stromzuleitungen) komplett auf dem Schaltungsträger 13 aufzubauen.

Andererseits ermöglicht diese Auslegung durch die Anbringung eines Sensors 16, z.B. Hall-Sensor, an der dem Schneckengetriebe 6 zugewandten Seite des Schaltungsträgers 13 eine Messung des Drehwinkels des Schneckenrads 7. Der Sensor 16 kann zu diesem Zweck beispielsweise unmittelbar benachbart der Umfangsverzahnung des Schneckenrads 7 angeordnet sein, wodurch eine inkrementelle Drehwinkelbestimmung über die Zahnkontur des Schneckenrads 7 ermöglicht wird. Eine andere Möglichkeit besteht darin, den Sensor 16 in einem Bereich innerhalb des Schneckenradumfangs anzuordnen und Markierungsmarken auf dem Schneckenrad 7 anzubringen, welche bei einer Rotation des Schneckenrads 7 an dem Sensor 16 vorbeilaufen.

Der Sensor 16 kann über Leiterbahnen und Durchführungskontaktierungen mit dem Mikroprozessor in elektrischer Verbindung stehen. Dieser nimmt eine Auswertung der erhaltenen Sensorsignale vor und gibt Steuersignale ab, welche zur Ansteuerung des Motorantriebsschaltkreises, z.B. einem H-Brücken-Motorantrieb, dienen. Dabei kann der Mikroprozessor weitere Einflußgrößen berücksichtigen, die beispielsweise von weiteren in der Verstelleinheit integrierten Sensoren geliefert oder in Form von externen Daten von einem mit der Verstelleinheit in Verbindung stehenden integrierten Kfz-Netzwerk (z.B. CAN oder J1850) mitgeteilt werden.

Die elektrische Anbindung der Verstelleinheit an die Kfz-Peripherie (Datennetz, Versorgungsstromkontrolllampen-Signale, Schaltsignale, Drehzahl-Signale, usw.) kann über einen einzigen Gerätestecker 17 bewerkstelligt werden. Dieser kann, wie in den Fig. 1 und 2 gezeigt, unmittelbar auf der Oberseite des Schaltungsträgers 13 angebracht sein, wobei die Geräte-interne Signal- und Versorgungsstromverteilung ausschließlich auf dem Schaltungsträger 13 erfolgen kann.

Oberhalb der Elektronikbauteile 14 kann eine Kühlung angebracht sind, die z.B. aus einem gut wärmeableitenden Aluminiumkörper 18 besteht. Zu diesem Zweck kann der Gehäuseboden 9 einen Vorsprung 9a umfassen, an dessen Außenseite der Aluminiumkörper 18 befestigt ist und der innenseitig mit dem Schaltungsträger 13 eine Flachkammer begrenzt, in der zumindest die Leistungskomponenten der Elektronikschaltung untergebracht sind.

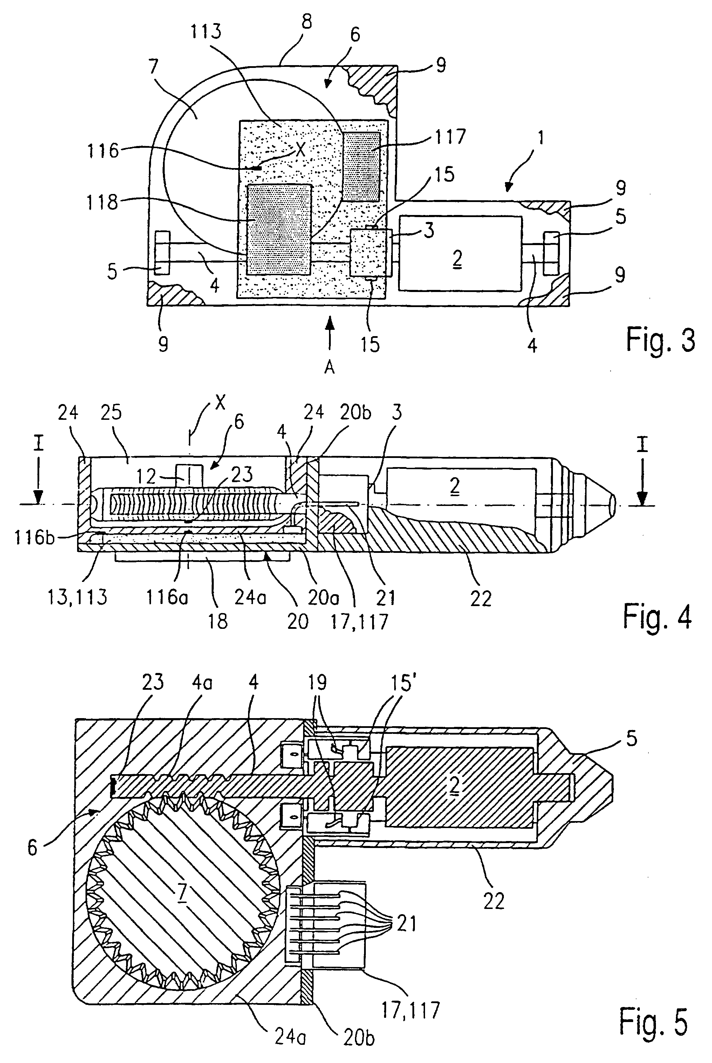

Fig. 3 zeigt eine teilweise aufgeschnittene Rückansicht eines zweiten Ausführungsbeispiels einer erfindungsgemäßen elektromechanischen Verstelleinheit. Die in Fig. 3 dargestellte Verstelleinheit ist in bezug auf die Ausbildung und Anordnung der mechanischen und elektromechanischen Komponenten 6, 1 im wesentlichen baugleich mit der Verstelleinheit nach dem ersten Ausführungsbeispiel, unterscheidet sich jedoch von letzterer in Bezug auf die Auslegung des Schaltungsträgers 113 sowie gegebenenfalls in Bezug auf die Form des Gehäuses 8, 9.

Der Schaltungsträger 113 ist ebenfalls rechteckig geschnitten, weist jedoch im Vergleich zu dem Schaltungsträger 13 eine erweiterte Baugröße auf. Der Schaltungsträger 113 verläuft ebenfalls parallel zu der Ebene E, wobei er jedoch in Längsrichtung quer zu der Welle 4 orientiert ist. An dem Schaltungsträger 113 sind in der bereits beschriebenen Weise die Kommutatorkontakte 15 und die Elektronikschaltung, die sich unterhalb eines Kühlkörpers 118 befindet, angebracht. Durch die erhöhte Baugröße des Schaltungsträgers 113 steht für die Elektronikschaltung mehr Platz zur Verfügung, gleichzeitig wird jedoch im Bereich seitlich von dem Kommutator 3 eine Vergrößerung des Gehäuses 8, 9 der Verstelleinheit erforderlich, um den Schaltungsträger 113 in dem Gehäuse unterbringen zu können.

Ein Vorteil der in Fig. 3 gezeigten Anordnung besteht darin, daß nun die Möglichkeit besteht, oberhalb der Drehachse X des Schneckenrads 7 einen Sensor, beispielsweise GMR-Sensor 116, an der Unterseite des Schaltungsträgers 113 anzubringen. Der GMR-Sensor 116 ermöglicht bei zentrischer Anbringung eines Magneten auf dem Schneckenrad 7 eine Absolutwinkelmessung, die gegenüber der inkrementellen Bestimmung eines Drehwinkels bevorzugt ist, weil eine Definition und - z.B. nach einer Abschaltung der Energieversorgung des Kfz - ein Wiederauffinden einer Nulllage entfällt.

Ein weiterer Vorteil der in Fig. 3 dargestellten Variante besteht darin, daß bedingt durch die Baugrößenerweiterung kostengünstige Schaltungsträger, z.B. FR4-Leiterplatten, eingesetzt werden können. Sollte dagegen der zur Verfügung stehende Bauraum nicht ausreichen, die Elektronikschaltung auf einer FR4-Leiterplatte zu realisieren, kann die Schaltung auf einem LTCC-Substrat, einer flexiblen Leiterplatte oder einer Kombination von Leiterplatten aufgebaut werden.

Ein auf der Oberseite des Schaltungsträgers 113 angebrachter Gerätestecker 117 kann ebenfalls baugrößer als der Gerätestecker 17 beim ersten Ausführungsbeispiel ausgeführt sein.

Anhand der Fig. 4 und 5 werden weitere Details und bauliche Varianten der vorstehend diskutierten Ausführungsbeispiele erläutert. Gemäß der in Fig. 4 gezeigten teilweise aufgeschnittenen Seitenansicht einer Verstelleinheit kann der Schaltungsträger 13, 113 auch so bemessen sein, daß er den Kommutator 3 nicht überdeckt. In diesem Fall werden die Kommutatorkontakte 15 von elektrischen Zuleitungen 19 kontaktiert, welche zu entsprechenden Leiterpads (nicht dargestellt) auf dem Schaltungsträger 13, 113 geführt sind.

Der Gerätestecker 17, 117 kann in einer Aussparung eines als Versteifungsteil wirkenden Aluminium-Winkelelements 20 befestigt sein, dessen einer Schenkel 20a den Boden des Gehäuses 9 bildet und dessen anderer Schenkel 20b die Aufnahmeöffnung für den Gerätestecker 17, 117 enthält. Zur Aufnahme des Elektromotors 1 kann ein separates Zylindergehäuse 22 vorgesehen sein, das seitlich neben dem Gerätestecker 17, 117 an dem Schenkel 20b anmontiert ist.

Bei dem Schaltungsträger 13, 113 handelt es sich um eine konventionelle, starre Leiterplatte. Wie oben beschrieben, kann aber auch um eine Kombination aus einer starren und einer flexiblen Leiterplatte oder eine komplett flexible Leiterplatte eingesetzt werden. Die Leiterplatte kann, wie in Fig. 4 gezeigt, ganzflächig mit ihrer Oberseite an dem Schenkel 20a des Winkelelements angebracht, z.B. auflaminiert (flexible Leiterplatte) sein. In diesem Fall befinden sich sämtliche elektrischen Komponenten (Sensorik, Elektronikschaltung, Steckerstifte 21 Zuleitungen 19 oder ggf. Kommutatorkontakte 15) an der Unterseite der Leiterplatte.

Die Sensorik umfaßt bei der in den Fig. 4 und 5 dargestellten Bauweise zwei GMR-Sensoren 116a und 116b, wobei der eine GMR-Sensor 116a, genauso wie der in Fig. 3 gezeigte Sensor 116, achsmittig über dem Schneckenrad 7 angeordnet ist, während der andere GMR-Sensor 116b benachbart dem motorfernen Ende der Welle 4 positioniert ist. Ein in die Endfläche der Welle 4 integrierter stabförmiger Permanentmagnet 23 mit Plus- und Minuspol verursacht bei der Rotation der Welle 4 ein sich in seiner Richtung änderndes Magnetfeld, dessen momentane Richtung von dem GMR-Sensor 116b fortlaufend erfaßt und der Elektronikschaltung mitgeteilt wird. Dadurch kann eine Absolutwinkelbestimmung und insbesondere auch eine Drehzahlmessung der Welle 4 realisiert werden.

Zur Montage der Verstelleinheit wird zunächst der Schaltungsträger 13, 113 mit den darauf montierten Komponenten (Elektronikschaltung, Sensorik, Steckerstifte 21, Zuleitungen 19 oder Kommutatorkontakte 15) als komplette Baugruppe vorgefertigt. Diese kostengünstig realisierbare Baugruppe wird dann unter Berücksichtigung der Steckeraussparung in das Winkelelement 20 eingesetzt.

Danach wird ein Kunststoff-Spritzgußgehäuse 24 in das Winkelelement 20 eingesetzt. Das Spritzgußgehäuse 24 weist einen Aufnahmeraum 25 für das Stellgetriebe 6 auf und ist mit einer durchgängigen Zwischenplatte 24a gebildet, welche den Aufnahmeraum 25 von der elektrischen Baugruppe abteilt und letztere damit vor Schmierstoffen, mechanischem Abrieb und dergleichen schützt.

Nachfolgend wird die Welle 4 des Rotors 2 durch eine Öffnung in dem Spritzgußgehäuse 24 und eine dahinter liegende Öffnung in dem Schenkel 20b des Winkelelements 20 hindurchgeschoben, bis der Kommutator 3 zwischen den Kommutatorkontakten 15' einrastet. Nun wird das Zylindergehäuse 22 über den Rotor 2 geschoben und an dem Schenkel 20b fixiert. Abschließend wird das Schneckenrad 7 in den Aufnahmeraum 25 des Spritzgußgehäuses 24 eingelegt.

Sämtliche Ausführungsbeispiele und -varianten sind vergleichbar und ermöglichen stets die Realisierung einer eigenständigen Geräteeinheit mit integrierter Sensorik und einem Minimum an elektrischen Zuleitungskabeln (z.B. lediglich Versorgungsstrom- und Datenleitungen).

## Patentansprüche

1. Elektromechanische Verstelleinheit zum Einstellen der Schaltstellungen eines Getriebes, welche
- einen elektromechanischen Antrieb (1),
- ein von dem elektromechanischen Antrieb (1) angetriebenes Schneckengetriebe (6) mit einem mechanischen Ausgang (12) zur Beeinflussung der Schaltstellungen des Getriebes,
- einen Schaltungsträger (13, 113), auf dem eine Elektronikschaltung (14) zur Steuerung des elektromechanischen Antriebs (1) realisiert ist, und
- ein mit der Elektronikschaltung (14) in elektrischer Verbindung stehendes Sensormittel (16, 116, 116a, 116b) zur Erfassung einer Bewegungsgröße des Schneckengetriebes (6)
umfaßt und
**dadurch gekennzeichnet ist, daß**
- daß sich der Schaltungsträger (13, 113) im wesentlichen parallel zur Mittenebene (E) eines Schneckenrades (7) des Schneckengetriebes (6) erstreckt und
- daß das Sensormittel (16, 116, 116a, 116b) auf dem Schaltungsträger (13, 113) angebracht ist.

2. Elektromechanische Verstelleinheit nach Anspruch 1,
**dadurch gekennzeichnet,**
- **daß** an dem Schaltungsträger (13, 113) Kommutatorkontakte (15) für den elektromechanischen Antrieb (1) angebracht sind.

3. Elektromechanische Verstelleinheit zum Einstellen der Schaltstellungen eines Getriebes, welche
- einen elektromechanischen Antrieb (1),
- ein von dem elektromechanischen Antrieb (1) angetriebenes Stellgetriebe (6) mit einem mechanischen Ausgang (12) zur Beeinflussung der Schaltstellungen des Getriebes,
- einen Schaltungsträger (13, 113), auf dem eine Elektronikschaltung (14) zur Steuerung des elektromechanischen Antriebs (1) realisiert ist, und
- ein mit der Elektronikschaltung (14) in elektrischer Verbindung stehendes Sensormittel (16, 116, 116a, 116b) zur Erfassung einer Bewegungsgröße des Stellgetriebes (6)
umfaßt und
**dadurch gekennzeichnet ist,**
- **daß** an dem Schaltungsträger (13, 113) Kommutatorkontakte (15) für den elektromechanischen Antrieb (1) angebracht sind und
- **daß** das Sensormittel (16, 116, 116a, 116b) auf dem Schaltungsträger (13, 113) angebracht ist.

4. Elektromechanische Verstelleinheit nach Anspruch 3,
**dadurch gekennzeichnet,**
- **daß** das Stellgetriebe (6) ein Schneckengetriebe ist, und
- **daß** sich der Schaltungsträger (13, 113) im wesentlichen parallel zur Mittenebene (E) eines Schneckenrades (7) des Schneckengetriebes (6) erstreckt.

5. Elektromechanische Verstelleinheit nach einem der vorhergehenden Ansprüche,
**dadurch gekennzeichnet,**
- **daß** an dem Schaltungsträger (13, 113) ein Steckerelement (17, 117) zur Anbindung der elektromechanischen Verstelleinheit an eine elektrische Kfz-Peripherie angebracht ist.

6. Elektromechanische Verstelleinheit nach einem der Ansprüche 1, 2, 4 oder 5,
**dadurch gekennzeichnet,**
- **daß** der Schaltungsträger (13) so dimensioniert ist, daß er nicht mehr als einen Randbereich des Schneckenrads (7) überdeckt, und
- **daß** in diesem Bereich ein erster Sensor (16), insbesondere Hall-Sensor, zur Erfassung einer Drehbewegung des Schneckenrads (7) an dem Schaltungsträger (13) angebracht ist.

7. Elektromechanische Verstelleinheit nach Anspruch 6,
**dadurch gekennzeichnet,**
- **daß** der Schaltungsträger (113) so dimensioniert ist, daß er das Zentrum des Schneckenrads (7) überdeckt, und
- **daß** in einem Bereich benachbart des Schneckenradzentrums ein zweiter Sensor (116, 116a), insbesondere GMR-Sensor, zur Erfassung einer absoluten Drehwinkelstellung des Schneckenrads (7) an dem Schaltungsträger (113) angebracht ist.

8. Elektromechanische Verstelleinheit nach Anspruch 7,
**dadurch gekennzeichnet,**
- **daß** der Schaltungsträger (13, 113) so dimensioniert ist, das er das antriebsferne Ende einer Schneckenwelle (4) des Schneckengetriebes (6) überdeckt, und
- **daß** in diesem Bereich ein dritter Sensor (116b), insbesondere GMR-Sensor, zur Erfassung einer Drehbewegung der Schneckenwelle (4) an dem Schaltungsträger (13, 113) angebracht ist.

9. Elektromechanische Verstelleinheit nach einem der vorhergehenden Ansprüche,
**dadurch gekennzeichnet,**
- **daß** das Stellgetriebe eine Welle (4) mit einem Permanentmagneten (23) aufweist, der entgegengesetzte Pole hat, um bei Drehung der Welle (4) ein sich änderndes Magnetfeld zu erzeugen.

10. Elektromechanische Verstelleinheit nach einem der vorhergehenden Ansprüche,
**dadurch gekennzeichnet,**
- **daß** der Schaltungsträger (13, 113) in einem von dem Stellgetriebe (6) abgeteilten Gehäuseraum untergebracht ist.

11. Elektromechanische Verstelleinheit nach Anspruch 9,
**dadurch gekennzeichnet,**
- **daß** der Schaltungsträger (13, 113) eine starre Leiterplatte ist.

12. Elektromechanische Verstelleinheit nach einem der vorhergehenden Ansprüche,
**dadurch gekennzeichnet,**
- **daß** der Schaltungsträger (13, 113) eine zumindest teilflächig auf einen metallischen Träger (20) aufgeklebte flexible Leiterplatte ist.

13. Elektromechanische Verstelleinheit nach einem der vorhergehenden Ansprüche,
**dadurch gekennzeichnet,**
- **daß** das Getriebe ein Verteilergetriebe ist.

14. Elektromechanische Verstelleinheit nach einem der vorhergehenden Ansprüche,
**dadurch gekennzeichnet,**
- **daß** das Getriebe ein Kraftfahrzeuggetriebe ist.

## Claims

1. Electromechanical adjusting unit for setting the shift positions of a transmission, which comprises
- an electromechanical drive (1),
- an actuating gear (6), driven by the electromechanical drive (1), with a mechanical output (12) for influencing the shift positions of the transmission,
- a circuit support (13, 113) on which an electronic circuit (14) is implemented for controlling the electromechanical drive (1), and
- a sensor means (16, 116, 116a, 116b), electrically connected to the electronic circuit (14), for detecting a movement variable of the worm gear (6), and
**characterized**
- **in that** the circuit support (13, 113) extends substantially parallel to the centre plane (E) of a worm wheel (7) of the worm gear (6) and
- **in that** the sensor means (16, 116, 116a, 116b) is mounted on the circuit support (13, 113).

2. Electromechanical adjusting unit according to Claim 1, **characterized**
- **in that** commutator contacts (15) for the electromechanical drive (1) are mounted on the circuit support (13, 113).

3. Electromechanical adjusting unit for setting the shift positions of a transmission, which comprises
- an electromechanical drive (1),
- an actuating gear (6), driven by the electromechanical drive (1), with a mechanical output (12) for influencing the shift positions of the transmission,
- a circuit support (13, 113) on which an electronic circuit (14) is implemented for controlling the electromechanical drive (1), and
- a sensor means (16, 116, 116a, 116b), electrically connected to the electronic circuit (14), for detecting a movement variable of the actuating gear (6), and
**characterized in that**
- commutator contacts (15) for the electromechanical drive (1) are mounted on the circuit support (13, 113) and
- **in that** the sensor means (16, 116, 116a, 116b) is mounted on the circuit support (13, 113).

4. Electromechanical adjusting unit according to Claim 3, **characterized**
- **in that** the actuating gear (6) is a worm gear, and
- **in that** the circuit support (13, 113) extends substantially parallel to the centre plane (E) of a worm wheel (7) of the worm gear (6).

5. Electromechanical adjusting unit according to one of the preceding claims, **characterized**
- **in that** a plug connector element (17, 117) is mounted on the circuit support (13, 113) in order to connect the electromechanical adjusting unit to an electrical motor vehicle periphery.

6. Electromechanical adjusting unit according to one of Claims 1, 2, 4 or 5, **characterized**
- **in that** the circuit support (13) is dimensioned such that it covers no more than an edge region of the worm wheel (7), and
- **in that** a first sensor (16), in particular a Hall sensor, is mounted on the circuit support (13) in this region in order to detect a rotary movement of the worm wheel (7).

7. Electromechanical adjusting unit according to Claim 6, **characterized**
- **in that** the circuit support (113) is dimensioned such that it covers the centre of the worm wheel (7), and
- **in that** a second sensor (116, 116a), in particular a GMR sensor, is mounted on the circuit support (113) in a region neighbouring the worm wheel centre in order to detect an absolute rotational angle position of the worm wheel (7).

8. Electromechanical adjusting unit according to Claim 7, **characterized**
- **in that** in that the circuit support (13, 113) is dimensioned such that it covers that end of a worm shaft (4) of the worm gear (6) which is remote from the drive, and
- **in that** a third sensor (116b), in particular a GMR sensor, is mounted on the circuit support (13, 113) in this region in order to detect a rotary movement of the worm shaft (4).

9. Electromechanical adjusting unit according to one of the preceding claims, **characterized**
- **in that** the actuating gear has a shaft (4) with a permanent magnet (23) that has opposite poles in order to generate a changing magnetic field as the shaft (4) rotates.

10. Electromechanical adjusting unit according to one of the preceding claims, **characterized**
- **in that** the circuit support (13, 113) is accommodated in a housing space partitioned off from the actuating gear (6).

11. Electromechanical adjusting unit according to Claim 9, **characterized**
- **in that** the circuit support (13, 113) is a rigid printed circuit board.

12. Electromechanical adjusting unit according to one of the preceding claims, **characterized**
- **in that** the circuit support (13, 113) is a flexible printed circuit board bonded at least over part of the surface onto a metallic support (20).

13. Electromechanical adjusting unit according to one of the preceding claims, **characterized**
- **in that** the gear is a power divider.

14. Electromechanical adjusting unit according to one of the preceding claims, **characterized**
- **in that** the gear is a motor vehicle transmission.

## Revendications

1. Unité d'ajustement électromécanique pour le réglage des positions de commutation d'une boîte de vitesses qui comprend
- un entraînement (1) électromécanique,
- un engrenage à vis sans fin (6) entraîné par l'entraînement (1) électromécanique, avec une sortie (12) mécanique pour influencer les positions de commutation de la boîte de vitesses,
- un support de circuit (13, 113), sur lequel est réalisé un circuit électronique (14) pour la commande de l'entraînement (1) électromécanique, et
- un capteur (16, 116, 116a, 116b) en liaison électrique avec le circuit électronique (14) pour l'enregistrement d'une grandeur de déplacement de l'engrenage à vis sans fin (6) et
**caractérisée en ce que**
- le support de circuit (13, 113) s'étend sensiblement parallèlement au plan médian (E) d'une roue à vis sans fin (7) de l'engrenage à vis sans fin (6) et
- le capteur (16, 116, 116a, 116b) est placé sur le support de circuit (13, 113).

2. Unité d'ajustement électromécanique selon la revendication 1,
**caractérisée en ce que**
- des contacts de commutateur (15) pour l'entraînement (1 ) électromécanique sont placés sur le support de circuit (13, 113).

3. Unité d'ajustement électromécanique pour le réglage des positions de commutation d'une boîte de vitesses, qui comprend
- un entraînement (1) électromécanique,
- un mécanisme de réglage (6) entraîné par l'entraînement (1) électromécanique avec une sortie (12) mécanique pour influencer les positions de commutation de la boîte de vitesses,
- un support de circuit (13, 113) sur lequel est réalisé un circuit électronique (14) pour la commande de l'entraînement (1) électromécanique, et
- un capteur (16, 116, 116a, 116b) en liaison électrique avec le circuit électronique (14) pour l'enregistrement d'une grandeur de déplacement du mécanisme de réglage (6) et
**caractérisée en ce que**
- des contacts de commutateur (15) pour l'entraînement (1 ) électromécanique sont placés sur le support de circuit (13, 113) et
- le capteur (16, 116, 116a, 116b) est placé sur le support de circuit (13, 113).

4. Unité d'ajustement électromécanique selon la revendication 3,
**caractérisée en ce que**
- le mécanisme de réglage (6) est un engrenage à vis sans fin, et
- le support de circuit (13, 113) s'étend sensiblement parallèlement au plan médian (E) d'une roue à vis sans fin (7) de l'engrenage à vis sans fin (6).

5. Unité d'ajustement électromécanique selon l'une quelconque des revendications précédentes,
**caractérisée en ce que**
- un élément à fiches (17, 117) pour le rattachement de l'unité d'ajustement électromécanique à une périphérie de véhicule électrique est placé sur le support de circuit (13, 113).

6. Unité d'ajustement électromécanique selon l'une quelconque des revendications 1, 2, 4 ou 5,
**caractérisée en ce que**
- le support de circuit (13) est dimensionné de telle sorte qu'il ne recouvre pas plus qu'une zone périphérique de la roue à vis sans fin (7) et
- un premier capteur (16), en particulier un capteur de Hall pour l'enregistrement d'un mouvement de rotation de la roue à vis sans fin (7) est placé dans cette zone sur le support de circuit (13).

7. Unité d'ajustement électromécanique selon la revendication 6,
**caractérisée en ce que**
- le support de circuit (113) est dimensionné de telle sorte qu'il recouvre le centre de la roue à vis sans fin (7), et
- **en ce qu'**un second capteur (116, 116a), en particulier un capteur GMR, pour l'enregistrement d'une position absolue d'angle de rotation de la roue à vis sans fin (7) est placé sur le support de circuit (113) dans une zone à proximité du centre de la roue à vis sans fin.

8. Unité d'ajustement électromécanique selon la revendication 7,
**caractérisée en ce que**
- le support de circuit (13, 113) est dimensionné de telle sorte qu'il recouvre l'extrémité, éloignée de l'entraînement, d'un arbre à vis sans fin (4) de l'engrenage à vis sans fin (6) et
- un troisième capteur (116b), en particulier un capteur GMR, pour l'enregistrement d'un mouvement de rotation de l'arbre à vis sans fin (4) est placé sur le support de circuit (13, 113) dans cette zone.

9. Unité d'ajustement électromécanique selon l'une quelconque des revendications précédentes,
**caractérisée en ce que**
- le mécanisme de réglage présente un arbre (4) avec un aimant permanent (23) qui a des pôles opposés afin de générer un champ magnétique qui varie lors de la rotation de l'arbre (4).

10. Unité d'ajustement électromécanique selon l'une quelconque des revendications précédentes,
**caractérisée en ce que**
- le support de circuit (13, 113) est logé dans un espace de boîtier séparé du mécanisme de réglage (6).

11. Unité d'ajustement électromécanique selon la revendication 9,
**caractérisée en ce que**
- le support de circuit (13, 113) est une carte imprimée rigide.

12. Unité d'ajustement électromécanique selon l'une quelconque des revendications précédentes,
**caractérisée en ce que**
- le support de circuit (13, 113) est une carte imprimée flexible collée au moins sur une surface partielle sur un support (20) métallique.

13. Unité d'ajustement électromécanique selon l'une quelconque des revendications précédentes,
**caractérisée en ce que**
- la boîte de vitesses est une boîte de transfert.

14. Unité d'ajustement électromécanique selon l'une quelconque des revendications précédentes,
**caractérisée en ce que**
- la boîte de vitesses est une boîte de vitesses automobile.
